# EUROPEAN PATENT APPLICATION

(11) **EP 3 916 881 A1**
(43) Date of publication of application: **01.12.2021**
(21) Application number: 20763559.0
(22) Date of filing: 27.02.2020
(51) Int. Cl.: H01M 10/42

(54) **CONTAINER-TYPE ENERGY STORAGE SYSTEM AND ENVIRONMENT CONTROL METHOD THEREFOR**

(30) Priority: 28.02.2019 CN 201910148942
(71) Applicant: Contemporary Amperex Technology Co., Limited, Jiaocheng District Ningde Fujian 352100 (CN)
(72) Inventor: ZHENG, Geli, NingdeCity, Fujian 352100 (CN)
(74) Representative: Raynor, Simon Mark
(86) International application number: PCT/CN2020/076875
(87) International publication number: WO 2020/173471

(57) **Abstract**

This application discloses a container-type energy storage system and an environment control method therefor. The energy storage system includes an energy storage battery (201), a battery management unit (202), an environment control unit (203), a ventilation system (204), and several sensors (205). The battery management unit (202 is connected to the energy storage battery (201) and the environment control unit (203). The ventilation system (204) is connected to the environment control unit (203). The several sensors sensor (205) are configured to detect different environmental parameters respectively in the energy storage system. The environmental parameters include a fire-type environmental parameter and a ventilation-type environmental parameter. The environment control unit (203) is configured to determine, according to the fire-type environmental parameter detected by the sensor (205) or a temperature and/or voltage that is of the energy storage battery (201) and obtained from the battery management unit (202), whether to perform a fire protection process; and perform the fire protection process if a determining result is to perform a fire protection process; or, control, if a determining result is not to perform a fire protection process, the ventilation system to turn on or off according to the ventilation-type environmental parameter detected by the sensor (205). This technical solution solves the problem of low effectiveness in detecting and preventing a fire of a battery in a container-type energy storage system in the existing art.

## Description

### CROSS-REFERENCE TO RELATED APPLICATIONS

This application claims priority to Chinese Patent Application No. 201910148942.7, filed on February 28, 2019 and entitled "CONTAINER-TYPE ENERGY STORAGE SYSTEM AND ENVIRONMENT CONTROL METHOD THEREFOR", which is incorporated herein by reference in its entirety.

### TECHNICAL FIELD

This application relates to the technical field of a container-type energy storage system, and in particular, to a container-type energy storage system and an environment control method therefor.

### BACKGROUND

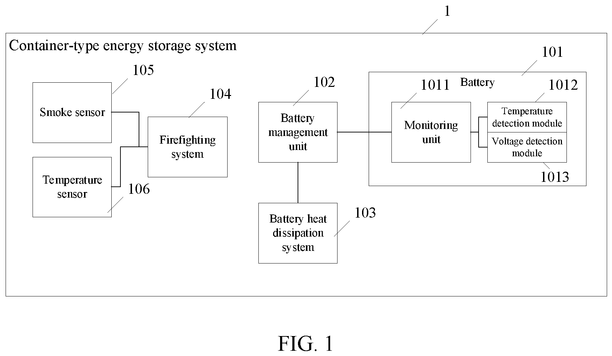

FIG. 1 is a schematic structural diagram of a container-type energy storage system in the existing art.

Referring to FIG. 1, the container-type energy storage system 1 includes: a battery 101, a battery management unit 102, a battery heat dissipation system 103, a firefighting system 104, a smoke sensor 105, and a temperature sensor 106.

Inside the battery 101, a monitoring unit 1011, a temperature detection module 1012, and a voltage detection module 1013 are included. The monitoring unit 1011 is configured to monitor a battery temperature detected by the temperature detection module 1012 and a battery voltage detected by the voltage detection module 1013. The battery management unit 102 is connected to the monitoring unit 1011 and the battery heat dissipation system 103. The firefighting system 104 is connected to the smoke sensor 105 and the temperature sensor 106. The firefighting system 104 is configured to determine, according to smoke detected by the smoke sensor 105 inside the energy storage system and/or a temperature detected by the temperature sensor 106 inside the energy storage system, whether to start a fire protection process.

A container-type energy storage system in the existing art generally uses an independent smoke sensor and an independent temperature sensor for detection, and the firefighting system adopts a gas fire extinguishing device. During firefighting, the fire extinguishing device needs to be sealed to prevent a fire extinguishing gas from leaking and thus affecting fire extinguishing effects. Therefore, the container-type energy storage system in the existing art adopts airtight design.

However, the airtight design has the following problems: (1) the container-type energy storage system provides a long service life, and interior materials thereof are mostly plastics. In a long-term process of using the battery in an airtight environment, the plastics or battery cells volatilize some hazardous gases and lead to accumulation of the hazardous gases. (2) The smoke sensor and the temperature sensor in the energy storage system are unable to detect abnormality of the battery in time. Generally, the abnormality is not detected until the battery cell has caught fire and the fire has built up (a smoke concentration and a temperature reach specific conditions) when it is generally too late to perform fire protection. Therefore, the smoke sensor and the temperature sensor are merely effective in detecting fires that occur outside the battery in the container-type energy storage system, but scarcely effective in detecting and preventing a fire of the battery.

### SUMMARY

In view of the foregoing, an embodiment of this application provides a container-type energy storage system and an environment control method therefor to solve the problem of low effectiveness in detecting and preventing a fire of a battery in a container-type energy storage system in the existing art.

According to one aspect, an embodiment of this application provides a container-type energy storage system, including an energy storage battery, a battery management unit, an environment control unit, a ventilation system, and several sensors. The battery management unit is connected to the energy storage battery and the environment control unit. The ventilation system is connected to the environment control unit. The several sensors are configured to detect different environmental parameters respectively in the energy storage system. The environmental parameters include a fire-type environmental parameter and a ventilation-type environmental parameter. The environment control unit is configured to determine, according to the fire-type environmental parameter detected by the sensor or a temperature and/or voltage that is of the energy storage battery and obtained from the battery management unit, whether to perform a fire protection process; and perform the fire protection process if a determining result is to perform a fire protection process; or, control, if a determining result is not to perform a fire protection process, the ventilation system to turn on or off according to the ventilation-type environmental parameter detected by the sensor.

In addition, the energy storage system further includes a fire protection unit. The fire protection unit is connected to the battery management unit. The battery management unit is configured to turn off an outbound power supply from the energy storage battery, turn on the fire protection unit, and control an audible and visual alarm to ring out when the determining result is to perform a fire protection process. The environment control unit is further configured to control the ventilation system to turn off.

In addition, the fire-type environmental parameter includes an environmental temperature parameter and an environmental smoke parameter. The environment control unit is configured to determine to perform a fire protection process when any of the following conditions is met: 1) the environmental temperature parameter reaches a first environmental temperature threshold; 2) the environmental smoke parameter reaches a first smoke concentration threshold; 3) the temperature of the energy storage battery reaches a cell temperature threshold and/or the voltage of the energy storage battery reaches a cell voltage threshold; and 4) the environmental temperature parameter reaches a second environmental temperature threshold and the environmental smoke parameter reaches a second smoke concentration threshold, where the second environmental temperature threshold is less than the first environmental temperature threshold, and the second smoke concentration threshold is less than the first smoke concentration threshold.

In addition, the ventilation-type environmental parameter includes a hazardous gas concentration parameter. The environment control unit is configured to turn on the ventilation system if the hazardous gas concentration parameter detected by the sensor reaches a first gas concentration threshold or if timing for turning on the ventilation system reaches a turn-on time under the condition that the determining result is not to perform a fire protection process.

In addition, the environment control unit is further configured to turn off the ventilation system if timing for turning off the ventilation system reaches a turn-off time and the hazardous gas concentration parameter detected by the sensor is less than a second gas concentration threshold.

In addition, the environment control unit is further configured to turn on the ventilation system again if it is confirmed that a fire has been extinguished according to the fire-type environmental parameter detected by the sensor and if a fire occurrence time reaches a fire time threshold after the battery management unit turns off the outbound power supply from the energy storage battery, turns on the fire protection unit, and controls the audible and visual alarm to ring out and after the ventilation system is turned off.

In addition, the ventilation system includes an electric shutter and a fan. The environment control unit is configured to: when a condition for turning on the ventilation system is met, sequentially control the ventilation system to turn on the electric shutter and the fan, and receive a feedback signal of the electric shutter and a check-back signal of the fan separately; when both the feedback signal and the check-back signal are abnormal, control the ventilation system to turn off. The environment control unit is further configured to sequentially control the ventilation system to turn off the fan and the electric shutter when a condition for turning off the ventilation system is met.

According to another aspect, an embodiment of this application further provides an environment control method, applicable to an environment control unit in the container-type energy storage system described above. The environment control method includes: determining, according to a fire-type environmental parameter detected by a sensor or a temperature and/or voltage that is of an energy storage battery and obtained from a battery management unit, whether to perform a fire protection process; and performing the fire protection process if a determining result is to perform a fire protection process; or controlling, if a determining result is not to perform a fire protection process, the ventilation system to turn on or off according to the ventilation-type environmental parameter detected by the sensor.

Compared with the existing art, this technical solution achieves at least the following beneficial effects:

according to the container-type energy storage system provided in the embodiments of this application, the environment control unit not only obtains the fire-type environmental parameter detected by a plurality of sensors, but also obtains the temperature and/or voltage of the energy storage battery by connecting to the battery management unit. In this way, when determining whether to perform a fire protection process, not only the fire-type environmental parameter (such as environmental temperature parameter and environmental smoke parameter) detected in the energy storage system is considered, but also the temperature and/voltage of the energy storage battery is considered. Under the condition that no fire protection process is performed, the environment control unit further controls the ventilation system to turn on or off according to the obtained ventilation-type environmental parameter (such as the hazardous gas concentration parameter) detected by the sensor. The ventilation system is turned on if the detected hazardous gas concentration parameter reaches a threshold or the timing for turning on the ventilation system reaches the turn-on time.

In addition, after performing the fire protection process, the environment control unit turns on the ventilation system again if confirming that a fire has been extinguished according to the fire-type environmental parameter detected by the sensor and if a fire occurrence time reaches a fire time threshold, so as to expel the hazardous gas generated by combustion.

In conclusion, in determining whether to perform a fire protection process, this technical solution not only considers the environmental temperature and smoke in the energy storage system, but also considers the temperature and/or voltage of the battery, thereby mitigating the problem of low ineffectiveness in detecting and preventing a battery fire in the existing art. Exemplarily, the concentration of hazardous gas in the energy storage system is kept below a specific concentration value by detecting the concentration of the hazardous gas and ventilating regularly (that is, by setting timing for turning on and turning off the ventilation system), thereby ensuring safety of persons and properties.

### DESCRIPTION OF DRAWINGS

To describe the technical solutions in the embodiments of this application more clearly, the following outlines the accompanying drawings used in the embodiments. Apparently, the accompanying drawings outlined below are only a part of embodiments of this application. A person of ordinary skill in the art may derive other drawings from these accompanying drawings without making any creative efforts.
FIG. 1 is a schematic structural diagram of a container-type energy storage system in the existing art;
FIG. 2 is a schematic structural diagram of a container-type energy storage system according to this application;
FIG. 3 is a schematic flowchart of an embodiment of an environment control method according to this application;
FIG. 4A is a schematic flowchart of a specific embodiment of controlling a ventilation system to turn on in an environment control method according to this application; and
FIG. 4B is a schematic flowchart of a specific embodiment of controlling a ventilation system to turn off in an environment control method according to this application.

### Reference numerals:

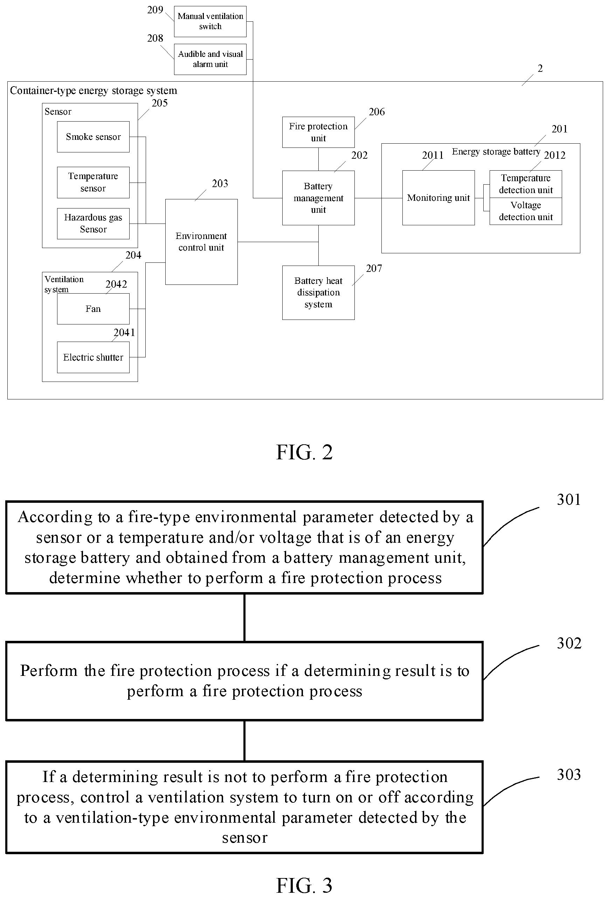

Reference numerals in FIG. 1 are as follows:
1: Energy storage system;
101: Battery;
1011: Monitoring unit;
1012: Temperature detection module;
1013: Voltage detection module;
102: Battery management unit;
103: Battery heat dissipation system;
104: Firefighting system;
105: Smoke sensor; and
106: Temperature sensor.
Reference numerals in FIG. 2 are as follows:
2: Energy storage system;
201: Energy storage battery;
2011: Monitoring unit;
2012: Temperature detection unit;
2013: Voltage detection unit;
202: Battery management unit;
203: Environment control unit;
204: Ventilation system;
2041: Electric shutter;
2042: Fan;
205: Sensor;
206: Fire protection unit;
207: Battery heat dissipation system;
208: Audible and visual alarm unit; and
209: Manual ventilation switch.

### DESCRIPTION OF EMBODIMENTS

For better understanding of the technical solutions of this application, the following describes embodiments of this application in detail with reference to accompanying drawings.

It is apparent that the described embodiments are only a part of rather than an entirety of the embodiments of this application. All other embodiments derived by a person of ordinary skill in the art based on the embodiments of this application without making any creative efforts may fall within the protection scope of this application.

FIG. 2 is a schematic structural diagram of a container-type energy storage system according to this application.

Referring to FIG. 2, the energy storage system 2 includes an energy storage battery 201, a battery management unit 202, an environment control unit 203, a ventilation system 204, several sensors 205, a fire protection unit 206, and a battery heat dissipation system 207. An audible and visual alarm unit 208 and a manual ventilation switch 209 are further disposed outside the energy storage system 2.

Specifically, the energy storage battery 201 includes a monitoring unit 2011, a temperature detection unit 2012, and a voltage detection unit 2013. The temperature detection unit 2012 and the voltage detection unit 2013 are connected to the monitoring unit 2011.

The battery management unit 202 is connected to the energy storage battery 201, the environment control unit 203, and the fire protection unit 206. The battery management unit 202 is also connected to the audible and visual alarm unit 208 and the manual ventilation switch 209.

The environment control unit 203 is connected to the ventilation system 204 and the several sensors 205. The sensors 205 include, but are not limited to, a temperature sensor, a smoke sensor, and a hazardous gas sensor. The ventilation system 204 includes an electric shutter 2041 and a fan 2042.

In this embodiment, during normal use of the energy storage system 2, the ventilation system 204 is set to ventilate regularly. Specifically, a timed turn-on period of the ventilation system 204 is set. When the timing for turning on the ventilation system 204 reaches a turn-on time, the ventilation system 204 is turned on. When the timing for turning off the ventilation system 204 reaches a turn-off time, the ventilation system 204 is turned off. Through the regular ventilation policy, the hazardous gas concentration inside the energy storage system 2 can be controlled to be lower than a specific concentration (or called a critical point of hazardous gas concentration) during normal use.

Each sensor 205 is configured to detect an environmental parameter inside the energy storage system 2. Specifically, for example, a temperature sensor detects the environmental temperature parameter, a smoke sensor detects the environmental smoke parameter, and a hazardous gas sensor detects the hazardous gas concentration parameter. In this embodiment, the environmental parameters detected by the sensors are categorized into fire-type environmental parameters and ventilation-type environmental parameters. The fire-type environmental parameters include an environmental temperature parameter and an environmental smoke parameter. The ventilation environmental parameters include a hazardous gas concentration parameter.

It needs to be noted that in practical applications, the quantity of sensors and the detected environmental parameters are not limited to the three items mentioned above. A person skilled in the art may dispose corresponding sensors to detect corresponding environmental parameters according to different environment control requirements.

The environment control unit 203 can obtain the environmental parameter detected by each sensor. Different from the existing art, the environment control unit 203 can also communicate with the battery management unit 202 to obtain the temperature and/or voltage of the energy storage battery 201. Specifically, the temperature detection unit 2022 and the voltage detection unit 2033 of the energy storage battery 201 can detect the temperature and voltage of the energy storage battery 201. The monitoring unit 2011 can monitor the temperature and voltage of the energy storage battery 201. The battery management unit 202 obtains the temperature and voltage of the energy storage battery 201 through the monitoring unit 2011. In this way, the environment control unit 203 can obtain the temperature and/or voltage of the energy storage battery 201 from the battery management unit 202.

The environment control unit 203 determines, according to the fire-type environmental parameter detected by the sensor 205 or the temperature and/or voltage that is of the energy storage battery 201 and obtained from the battery management unit 202, whether to perform a fire protection process.

Specifically, the environment control unit 203 determines to perform a fire protection process when any of the following conditions is met: 1) the environmental temperature parameter reaches a first environmental temperature threshold; 2) the environmental smoke parameter reaches a first smoke concentration threshold; 3) the temperature of the energy storage battery reaches a cell temperature threshold and/or the voltage of the energy storage battery reaches a cell voltage threshold; and 4) the environmental temperature parameter reaches a second environmental temperature threshold and the environmental smoke parameter reaches a second smoke concentration threshold, where the second environmental temperature threshold is less than the first environmental temperature threshold, and the second smoke concentration threshold is less than the first smoke concentration threshold.

Different from the conditions 1) and 2), the condition 4) means that, it is also determined to perform a fire protection process if the environmental temperature parameter reaches the relatively low second environmental temperature threshold and the environmental smoke parameter reaches the relatively low second smoke concentration threshold even although the environmental temperature parameter has not reached the relatively high first environmental temperature threshold (that is, the condition 1 is not met) and the environmental smoke parameter has not reached the relatively high first smoke concentration threshold (that is, the condition 2 is not met). The safety of fire protection for the energy storage system is improved by taking the environmental temperature parameter and the environmental smoke parameter into overall consideration.

In each of the foregoing conditions, the first environmental temperature threshold, the first smoke concentration threshold, the cell temperature threshold, the cell voltage threshold, the second environmental temperature threshold, and the second smoke concentration threshold can be set according to different environment control requirements, and are not limited herein.

If determining to perform a fire protection process, the environment control unit 203 instructs the battery management unit 202 to turn off the outbound power supply from the energy storage battery 201, turn on the fire protection unit 206, and control the audible and visual alarm unit 207 to start an audible and visual alarm. The fire protection unit 206 uses a gas fire extinguishing device to extinguish a fire. Therefore, if the ventilation system 204 is in a turned-on state at this time, the environment control unit 203 further controls the ventilation system 204 to turn off.

Exemplarily, the environment control unit 203 is further configured to turn on the ventilation system 204 again if it is confirmed that a fire has been extinguished according to the fire-type environmental parameter detected by the sensor 205 and if a fire occurrence time reaches a fire time threshold after the fire protection process is performed (that is, after the battery management unit 202 turns off the outbound power supply from the energy storage battery 201, turns on the fire protection unit 206, and controls the audible and visual alarm unit 208 to start an audible and visual alarm, and after the ventilation system 204 is turned off).

If determining not to perform a fire protection process, the environment control unit 203 controls the ventilation system to turn on or off according to the ventilation-type environmental parameter detected by the sensor.

Specifically, the ventilation system is turned on when any one of the following two conditions is met: 1) the hazardous gas concentration parameter detected by the sensor reaches the first gas concentration threshold; and 2) the timing for turning on the ventilation system reaches the turn-on time.

The ventilation system is turned off if the following condition is met: the timing for turning off the ventilation system reaches the turn-off time and the hazardous gas concentration parameter detected by the sensor is less than the second gas concentration threshold. Exemplarily, under the condition that the ventilation system is turned off, the battery management unit 202 is further configured to skip responding to a turn-on instruction of the manual ventilation switch 209.

In this embodiment, the ventilation system 204 includes an electric shutter 2041 and a fan 2042.

Specifically, ventilation is evidently effective by turning on both the electric shutter 2041 and the fan 2042, and is also effective by merely turning on the electric shutter 2041 or merely turning on the fan 2042. For example, under the condition that the fan 2042 is faulty, ventilation is also effective by merely turning on the electric shutter 2041 (but less effective than by turning on both of them normally). For another example, under the condition that the electric shutter 2041 is faulty, ventilation is achieved inside the energy storage system 2 by merely turning on the fan 2042. Therefore, in the case that either the electric shutter 2041 or the fan 2042 is faulty, the ventilation system 204 can still be in a ventilative state. The ventilation system 204 is unable to achieve a ventilation effect only if both the electric shutter 2041 and the fan 2042 are faulty. In this case, the environment control unit 203 turns off the ventilation system 204.

Therefore, in this embodiment, the environment control unit 203 is configured to: when a condition for turning on the ventilation system is met, sequentially control the ventilation system 204 to turn on the electric shutter 2041 and the fan 2042, and receive a feedback signal of the electric shutter 2041 and a check-back signal of the fan 2042 separately; when both the feedback signal and the check-back signal are abnormal, control the ventilation system 204 to turn off; and sequentially control the ventilation system 204 to turn off the fan 2042 and the electric shutter 2041 when a condition for turning off the ventilation system 204 is met.

An embodiment of this application further provides an environment control method, applicable to the container-type energy storage system shown in FIG. 2.

FIG. 3 is a schematic flowchart of an embodiment of an environment control method according to this application.

In this embodiment, steps in the environment control method are performed by an environment control unit in the container-type energy storage system shown in FIG. 2.

Specifically, referring to FIG. 3, the environment control method includes the following steps.

Step 301: According to a fire-type environmental parameter detected by a sensor or a temperature and/or voltage that is of an energy storage battery and obtained from a battery management unit, determine whether to perform a fire protection process.

Step 302: Perform the fire protection process if a determining result is to perform a fire protection process.

Step 303: If a determining result is not to perform a fire protection process, control a ventilation system to turn on or off according to a ventilation-type environmental parameter detected by the sensor.

In step 301, it is determined to perform a fire protection process when any of the following conditions is met: 1) an environmental temperature parameter reaches a first environmental temperature threshold; 2) an environmental smoke parameter reaches a first smoke concentration threshold; 3) a temperature of the energy storage battery reaches a cell temperature threshold and/or the voltage of the energy storage battery reaches a cell voltage threshold; and 4) the environmental temperature parameter reaches a second environmental temperature threshold and the environmental smoke parameter reaches a second smoke concentration threshold, where the second environmental temperature threshold is less than the first environmental temperature threshold, and the second smoke concentration threshold is less than the first smoke concentration threshold.

In step 302, the performing the fire protection process includes:
Step 3021: When the determining result is to perform a fire protection process, instruct the battery management unit to turn off an outbound power supply from the energy storage battery, turn on a fire protection unit, and control an audible and visual alarm to ring out.
Step 3022: Control the ventilation system to turn off.

After step 3022, the following step is included: turning on the ventilation system again if it is confirmed that a fire has been extinguished according to the fire-type environmental parameter detected by the sensor and if a fire occurrence time reaches a fire time threshold.

The environment control method further includes:
Step 304: Turn on the ventilation system if a hazardous gas concentration parameter detected by the sensor reaches a first gas concentration threshold or if timing for turning on the ventilation system reaches a turn-on time under the condition that the determining result is not to perform a fire protection process.
Step 305: Turn off the ventilation system if timing for turning off the ventilation system reaches a turn-off time and the hazardous gas concentration parameter detected by the sensor is less than a second gas concentration threshold.

In step 303, the controlling the ventilation system to turn on includes:
Step 3031: Sequentially control the ventilation system to turn on the electric shutter and the fan when a condition for turning on the ventilation system is met;
Step 3032: Receive a feedback signal of the electric shutter and a check-back signal of the fan separately; and
Step 3033: When both the feedback signal and the check-back signal are abnormal, control the ventilation system to turn off.

The controlling the ventilation system to turn off includes:
Step 3034: Sequentially control the ventilation system to turn off the fan and the electric shutter when a condition for turning off the ventilation system is met.

The following uses a specific example to describe a process of controlling the ventilation system to turn on or off.

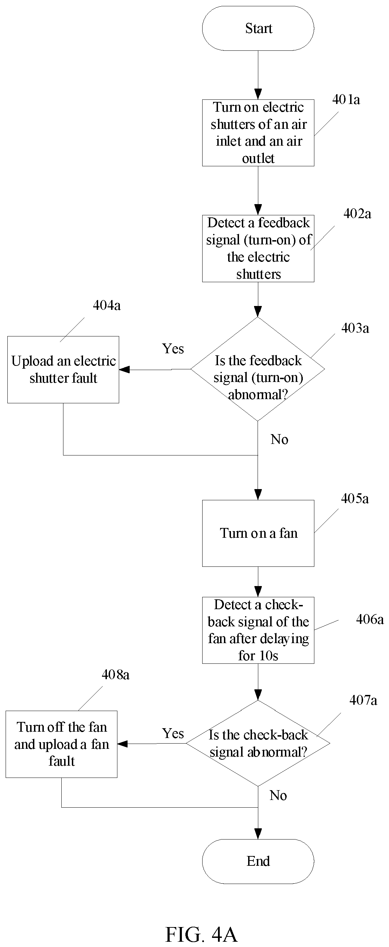

FIG. 4A is a schematic flowchart of a specific embodiment of controlling a ventilation system to turn on in an environment control method according to this application. Referring to FIG. 4A, the controlling the ventilation system to turn on includes the following steps.

Step 401a: Turn on electric shutters of an air inlet and an air outlet.

In practical applications, after turning on the electric shutters of the air inlet and the air outlet, delay for a specific period (such as 10 seconds) before performing subsequent steps.

Step 402a: Detect a feedback signal (turn-on) of the electric shutters.

The ventilation system detects the feedback signal of the electric shutters. The feedback signal means a feedback signal of turning on the electric shutters.

Step 403a: Check whether the feedback signal (turn-on) is abnormal. If the feedback signal (turn-on) is abnormal, perform step 404a and continue to perform step 405a after performing step 404a; if the feedback signal (turn-on) is normal, perform step 405a.

Step 404a: Upload an electric shutter fault.

The ventilation system uploads an electric shutter fault to the environment control unit.

Step 405a: Turn on the fan.

Step 406a: Detect the check-back signal of the fan after delaying for 10 seconds.

Step 407a: Verify whether the check-back signal is abnormal; if the check-back signal is abnormal, perform step 408a; if the check-back signal is normal, end the process.

Step 408a: Turn off the fan and upload a fan fault.

The ventilation system turns off the fan and uploads a fan fault to the environment control unit.

In this embodiment, conditions for turning on the ventilation system include: 1) the timing for the ventilation system reaches a turn-on time; 2) the hazardous gas sensor detects that the hazardous gas concentration parameter reaches a first gas concentration threshold; 3) after a fire protection process is performed, a fire warning invalid or valid time lasts for 60 minutes, the manual ventilation switch is valid, and a turn-on instruction is sent.

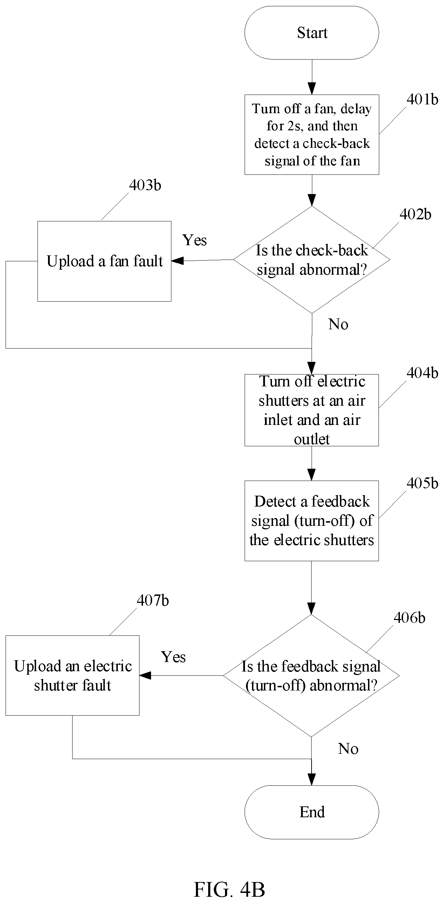

FIG. 4B is a schematic flowchart of a specific embodiment of controlling a ventilation system to turn off in an environment control method according to this application. Referring to FIG. 4B, the controlling the ventilation system to turn off includes the following steps.

Step 401b: Turn off the fan, delay for 2 seconds, and then detect a check-back signal of the fan.

Step 402b: Verify whether the check-back signal is abnormal. If the check-back signal is abnormal, perform step 403b and continue to perform step 404b after performing step 403b; if the check-back signal is normal, perform step 404b.

Step 403b: Upload a fan fault.

The ventilation system uploads a fan fault to the environment control unit.

Step 404b: Turn off the electric shutters at the air inlet and the air outlet.

Step 405b: Detect a feedback signal (turn-off) of the electric shutters.

The ventilation system detects the feedback signal of the electric shutters. The feedback signal means a feedback signal of turning off the electric shutters.

Step 406b: Check whether the feedback signal (turn-on) is abnormal. If the feedback signal is abnormal, perform step 407b; if the feedback signal is normal, end the process.

Step 407b: Upload an electric shutter fault.

The ventilation system uploads an electric shutter fault to the environment control unit.

In this embodiment, conditions for turning off the ventilation system include: 1) a fire protection process is underway; and 2) the manual ventilation switch is invalid, and a turn-off instruction is sent.

In conclusion, with the container-type energy storage system and the environment control method therefor provided according to this technical solution, in determining whether to perform a fire protection process, the environment control unit of the energy storage system not only considers the environmental temperature and smoke in the energy storage system, but also considers the temperature and/or voltage of the battery, thereby mitigating the problem of low ineffectiveness in detecting and preventing a battery fire in the existing art. In addition, the concentration of hazardous gas in the energy storage system is kept below a specific concentration value by detecting the concentration of the hazardous gas and ventilating regularly (that is, by setting timing for turning on and turning off the ventilation system), thereby ensuring safety of persons and properties.

The terms used in the embodiments of this application are intended only for describing specific embodiments rather than for limiting this application. Unless otherwise expressly indicated in the context, the words "a", "the", and "this" that precedes a singular noun in the embodiments and claims of this application are intended to include the plural form of the noun.

Understandably, the term "and/or" used herein only describes an association relationship between associated objects and indicates existence of three relationships. For example, "A and/or B" may indicate existence of A alone, coexistence of A and B, and existence of B alone. In addition, the character "/" herein generally indicates an "or" relationship between the object preceding the character and the object following the character.

Depending on the context, the word "if" as used herein may be interpreted as "at the time of" or "when" or "in response to determination" or "in response to detection." Similarly, depending on the context, the phrase "if determined" or "if detected (conditions or events stated)" may be interpreted as "when determined" or "in response to determination" or "when detected (conditions or events stated)" or "in response to detection (conditions or events stated)."

The foregoing descriptions are merely exemplary embodiments of this application, but are not intended to limit this application. Any modifications, equivalent substitutions, and improvements made within the spirit and principles of this application shall fall within the protection scope of this application.

## Claims

1. A container-type energy storage system, comprising an energy storage battery and a battery management unit, wherein the energy storage system further comprises an environment control unit, a ventilation system, and several sensors; the battery management unit is connected to the energy storage battery and the environment control unit, and the ventilation system is connected to the environment control unit;
the several sensors are configured to detect different environmental parameters respectively in the energy storage system, wherein the environmental parameters comprise a fire-type environmental parameter and a ventilation-type environmental parameter; and
the environment control unit is configured to determine, according to the fire-type environmental parameter detected by the sensor or a temperature and/or voltage that is of the energy storage battery and obtained from the battery management unit, whether to perform a fire protection process; and perform the fire protection process under the condition that a determining result is to perform a fire protection process; or, control, under the condition that a determining result is not to perform a fire protection process, the ventilation system to turn on or off according to the ventilation-type environmental parameter detected by the sensor.

2. The container-type energy storage system according to claim 1, wherein the energy storage system further comprises a fire protection unit, and the fire protection unit is connected to the battery management unit;
the battery management unit is configured to turn off an outbound power supply from the energy storage battery, turn on the fire protection unit, and control an audible and visual alarm to ring out when the determining result is to perform a fire protection process; and the environment control unit is further configured to control the ventilation system to turn off.

3. The container-type energy storage system according to claim 1 or 2, wherein the fire-type environmental parameter comprises an environmental temperature parameter and an environmental smoke parameter;
the environment control unit is configured to determine to perform a fire protection process when any of the following conditions is met:
1) the environmental temperature parameter reaches a first environmental temperature threshold;
2) the environmental smoke parameter reaches a first smoke concentration threshold;
3) the temperature of the energy storage battery reaches a cell temperature threshold and/or the voltage of the energy storage battery reaches a cell voltage threshold; and
4) the environmental temperature parameter reaches a second environmental temperature threshold and the environmental smoke parameter reaches a second smoke concentration threshold, wherein
the second environmental temperature threshold is less than the first environmental temperature threshold, and the second smoke concentration threshold is less than the first smoke concentration threshold.

4. The container-type energy storage system according to claim 1, wherein the ventilation-type environmental parameter comprises a hazardous gas concentration parameter; and
the environment control unit is configured to turn on the ventilation system under the condition that the hazardous gas concentration parameter detected by the sensor reaches a first gas concentration threshold or under the condition that timing for turning on the ventilation system reaches a turn-on time under the condition that the determining result is not to perform a fire protection process.

5. The container-type energy storage system according to claim 4, wherein the environment control unit is further configured to turn off the ventilation system under the condition that timing for turning off the ventilation system reaches a turn-off time and the hazardous gas concentration parameter detected by the sensor is less than a second gas concentration threshold.

6. The container-type energy storage system according to claim 2, wherein the environment control unit is further configured to turn on the ventilation system again under the condition that it is confirmed that a fire has been extinguished according to the fire-type environmental parameter detected by the sensor and under the condition that a fire occurrence time reaches a fire time threshold after the battery management unit turns off the outbound power supply from the energy storage battery, turns on the fire protection unit, and controls the audible and visual alarm to ring out and after the ventilation system is turned off.

7. The container-type energy storage system according to claim 1, wherein the ventilation system comprises an electric shutter and a fan;
the environment control unit is configured to: when a condition for turning on the ventilation system is met, sequentially control the ventilation system to turn on the electric shutter and the fan, and receive a feedback signal of the electric shutter and a check-back signal of the fan separately; when both the feedback signal and the check-back signal are abnormal, control the ventilation system to turn off; and
the environment control unit is further configured to sequentially control the ventilation system to turn off the fan and the electric shutter when a condition for turning off the ventilation system is met.

8. An environment control method, applicable to an environment control unit in the container-type energy storage system according to claim 1, wherein the environment control method comprises:
determining, according to a fire-type environmental parameter detected by a sensor or a temperature and/or voltage that is of an energy storage battery and obtained from a battery management unit, whether to perform a fire protection process; and
performing the fire protection process under the condition that a determining result is to perform a fire protection process; or
controlling, under the condition that a determining result is not to perform a fire protection process, the ventilation system to turn on or off according to the ventilation-type environmental parameter detected by the sensor.

9. The environment control method according to claim 8, wherein the energy storage system further comprises a fire protection unit, and the fire protection unit is connected to the battery management unit;
the performing the fire protection process comprises:
instructing, when the determining result is to perform a fire protection process, the battery management unit to turn off an outbound power supply from the energy storage battery, turn on the fire protection unit, and control an audible and visual alarm to ring out; and
controlling the ventilation system to turn off.

10. The environment control method according to claim 8 or 9, wherein the fire-type environmental parameter comprises an environmental temperature parameter and an environmental smoke parameter; and
it is determined to perform a fire protection process when any of the following conditions is met:
1) the environmental temperature parameter reaches a first environmental temperature threshold;
2) the environmental smoke parameter reaches a first smoke concentration threshold;
3) the temperature of the energy storage battery reaches a cell temperature threshold and/or the voltage of the energy storage battery reaches a cell voltage threshold; and
4) the environmental temperature parameter reaches a second environmental temperature threshold and the environmental smoke parameter reaches a second smoke concentration threshold, wherein
the second environmental temperature threshold is less than the first environmental temperature threshold, and the second smoke concentration threshold is less than the first smoke concentration threshold.

11. The environment control method according to claim 8, wherein the ventilation-type environmental parameter comprises a hazardous gas concentration parameter; and the environment control method further comprises:
turning on the ventilation system under the condition that the hazardous gas concentration parameter detected by the sensor reaches a first gas concentration threshold or under the condition that timing for turning on the ventilation system reaches a turn-on time under the condition that the determining result is not to perform a fire protection process.

12. The environment control method according to claim 11, further comprising:
turning off the ventilation system under the condition that timing for turning off the ventilation system reaches a turn-off time and the hazardous gas concentration parameter detected by the sensor is less than a second gas concentration threshold.

13. The environment control method according to claim 9, wherein after the controlling the ventilation system to turn off, the method further comprises:
turning on the ventilation system again under the condition that it is confirmed that a fire has been extinguished according to the fire-type environmental parameter detected by the sensor and under the condition that a fire occurrence time reaches a fire time threshold.

14. The environment control method according to claim 8, wherein the ventilation system comprises an electric shutter and a fan;
the controlling the ventilation system to turn on comprises:
sequentially controlling the ventilation system to turn on the electric shutter and the fan when a condition for turning on the ventilation system is met; and
receiving a feedback signal of the electric shutter and a check-back signal of the fan separately; and
controlling, when both the feedback signal and the check-back signal are abnormal, the ventilation system to turn off; and
the controlling the ventilation system to turn off comprises:
sequentially controlling the ventilation system to turn off the fan and the electric shutter when a condition for turning off the ventilation system is met.
